(19) Europäisches Patentamt
European Patent Office
Office européen des brevets

(11) **EP 1 044 424 B1**

(12) **EUROPÄISCHE PATENTSCHRIFT**

(45) Veröffentlichungstag und Bekanntmachung des Hinweises auf die Patenterteilung:
**02.06.2004 Patentblatt 2004/23**

(51) Int Cl.$^7$: **G06K 9/20**

(21) Anmeldenummer: **99968777.5**

(22) Anmeldetag: **05.11.1999**

(86) Internationale Anmeldenummer:
**PCT/EP1999/008471**

(87) Internationale Veröffentlichungsnummer:
**WO 2000/028470 (18.05.2000 Gazette 2000/20)**

(54) **ERZEUGEN EINES ABGEROLLTEN FINGERABDRUCKBILDES AUS EINER SERIE VON EINZELBILDERN**

PRODUCING AN IMAGE OF A ROLLED-OFF FINGERPRINT FROM A SERIES OF INDIVIDUAL IMAGES

PRODUCTION D'UNE IMAGE D'UNE EMPREINTE DIGITALE DEROULEE A PARTIR D'UNE SERIE D'IMAGES INDIVIDUELLES

(84) Benannte Vertragsstaaten:
**AT BE CH CY DE DK ES FI FR GB GR IE IT LI LU MC NL PT SE**

(30) Priorität: **09.11.1998 DE 19851544**

(43) Veröffentlichungstag der Anmeldung:
**18.10.2000 Patentblatt 2000/42**

(73) Patentinhaber: **Smiths Heimann Biometrics GmbH**
**07743 Jena (DE)**

(72) Erfinder:
• **LESZMANN, Ralph**
**D-07749 Jena (DE)**
• **EICHHORN, Torsten**
**D-07745 Jena (DE)**
• **MEISTER, Andreas**
**D-07747 Jena (DE)**
• **STANDAU, Jörg**
**D-07747 Jena (DE)**

(74) Vertreter: **Niestroy, Manfred**
**Patentanwälte**
**Geyer, Fehners & Partner**
**Sellierstrasse 1**
**07745 Jena (DE)**

(56) Entgegenhaltungen:
**WO-A-97/41528          US-A- 4 933 976**

**Beschreibung**

**Gebiet der Erfindung**

Die Erfindung betrifft ein Verfahren zur elektronischen Aufnahme eines als Funktion G (x, y) darstellbaren Bildes von der Oberfläche eines Gegenstandes, bei dem x und y die Koordinaten eines jeweiligen Bildpunktes des Bildes sind und G dessen Grauwert bezeichnet, wobei der Gegenstand über verschiedene Zeitpunkte $t_i$ sequentiell mit $t_{i+1} > t_i$ aus unterschiedlichen Perspektiven als Funktion $G_i$ aufgenommen wird, um das Gesamtbild G wie beim Abrollen eines Fingers zur Aufnahme eines Fingerabdrucks aus den Einzelbildern $G_I(x, y)$ zu bilden, wobei aus den Einzelbildern jeweils Teilstücke herausgeschnitten werden, die in Abhängigkeit der jeweiligen aufgenommenen Ansicht zusammengefugt werden. Weiter bezieht sich die Erfindung auf eine Vorrichtung mit einer Einrichtung zur elektronischen Aufnahme eines durch eine Funktion G (x, y) als Bildpunkte darstellbaren Bildes von der Oberfläche eines Gegenstandes, bei denen x und y die Koordinaten des jeweiligen Bildpunktes mit einem zugeordneten Grauwert G sind, sowie mit einer Einrichtung, mit welcher der Gegenstand über verschiedene Zeitpunkte $t_i$ sequentiell mit $t_{i+1} > t_i$ aus unterschiedlichen Perspektiven als Funktion $G_i$ abgebildet wird, um das Gesamtbild G, wie beim Abrollen eines Fingers zur Aufnahme eines Fingerabdrucks, aus den Einzelbildern $G_i(x, y)$ zu bilden, und einer elektronischen Bildverarbeitungseinrichtung, deren Schaltung dafur ausgelegt ist, aus den Einzelbildern jeweils Teilstücke herauszuschneiden und in Abhängigkeit der jeweilig aufgenommenen Ansicht zusammenzufügen. Weiter bezieht sich die Erfindung auf eine Anwendung des Verfahrens in einer derartigen Vorrichtung.

**Stand der Technik**

Während die Bilderfassung flacher Bilder heute standardmäßig durchgeführt wird, rückt das Abbilden dreidimensionaler Körper neuerdings immer mehr in das Interesse von Fachleuten. Als Anwendungen seien hier beispielsweise die Aufnahme dreidimensionaler Körper in drei Raumdimensionen oder zwei Oberflächendimensionen genannt. Dazu zählt im medizinischen Bereich die Tomographie und im Konsumerbereich die automatische Erfassung von Körpermaßen von Menschen, um maßgeschneiderte Kleidung mit Hilfe von Computern anzufertigen.

Bei derartigen Techniken ist es bekannt, einen Körper aus mehreren Ansichten abzubilden, wobei eine Bildaufnahmeeinrichtung insbesondere um den Körper herumgeführt wird. Beim Herumführen werden mehrere Aufnahmen genommen, aus denen dann in einem Computer das dreidimensionale Bild des Körpers oder die zweidimensionale Abwicklung der Oberfläche rekonstruiert wird.

Schwieriger ist die Aufnahme von der Oberfläche eines Fingers zur Erfassung von Fingerabdrücken für die Kriminalistik oder auch für zukünftige Anwendung zur Personenidentifizierung in Sicherheitssystemen.

Die Identifizierung von Personen ist neuerdings ein interessantes Gebiet in der Computertechnik geworden. Beispielsweise bietet die Firma COMPAQ seit diesem Jahr Computer an, die aus einem Fingerabdruck einen Zahlencode bestimmen, der anstelle eines Passworts zum Zugang zum oder zur Identifizierung beim Einkauf im Internet verwendbar ist. Dabei werden die Fingerlinien durch Auflegen des Fingers auf einem Sensor bestimmt.

Gegenüber den eingangs genannten Beispielen ist insbesondere die Aufnahme von Fingerabdrücken problematisch. Aufgrund der Elastizität des Fingers können sich die interessierenden Fingerlinien bei den unterschiedlichen Aufnahmen von den Fingerabdrücke verschieben, so daß die Eindeutigkeit der Zuordnung ohne besondere Maßnahmen zur Klassifizierung zweifelhaft ist.

Aus diesem Grund, aber auch wegen gesetzlicher Vorschriften in den meisten Ländern, versucht man in der Kriminalistik Fingerabdrücke so aufzunehmen, daß die Technik, den aufzunehmenden Finger mit Tinte zu versehen und auf einem Papier abzurollen, möglichst nachgebildet wird. Dabei wird statt des Papiers üblicherweise eine Glasplatte verwendet, auf die Licht unter Totalreflexionsbedingungen eingestrahlt wird. Beim Abrollen des Fingers stören die Fingerlinien aufgrund deren Berührung mit der Glasplatte die Totalreflektion, die Auflagepunkte werden also dunkel, so daß sich dann optisch eine ähnliche Situation ergibt, wie bei dem Abrollen eines Fingers auf einem Papier. Das aufgrund der Totalreflexion mit unterschiedlichen Lichtintensitäten entstehende Bild wird dann elektronisch aufgenommen und ausgewertet.

Obwohl das nachfolgend näher dargestellte Verfahren und die Vorrichtung auch für andere Anwendungen, wie sie eingangs beispielhaft dargestellt wurden, anwendbar ist, werden die folgenden Ausführungen im wesentlichen auf die Fingerabdrucktechnik bezogen, weil sich hier die sich ergebende Problematik des Erfassens einer gekrümmten Oberfläche besonders deutlich zeigen läßt.

Beim Abrollen zur elektronischen Aufnahme von Einzelbildern werden nämlich zu bestimmten Zeitpunkten genommen, das Gesamtbild liegt also in Stufen als Teilbilder des Abrollvorgangs vor, während bei der Aufnahme auf Papier eine kontinuierliche Abbildung erfolgt. Die stufenweise Aufnahme führt dabei zu dem Problem, zu entscheiden, wie die Bilder zusammenzusetzen sind. Eine einfache Zusammensetzung der Einzelbilder ist im allgemeinen nicht möglich, da sich der Finger beim Abrollen verformt und sich dadurch beim Abrollen sogar die Struktur der Fingerlinien verändert. Ähnliche Probleme treten auch in der Tomographie auf, wenn sich der Patient bewegt. Ferner gilt das Gleiche bei der Fertigung von Maßkleidung über Computer, wenn der Kunde nicht stillhält. Bei der Aufnahme von Fingerabdrücken ist diese Problematik aber besonders ausgeprägt.

Bekannte Verfahren zur Rekonstruktion einer Gesamtoberfläche aus Einzelbildern sind aus der US 4 933 976, der US 5 230 025 und der WO 97/41528 bekannt. Gemäß der Lehren dieser Patentschriften wird ein Streifen aus den Einzelbildern entnommen und das Gesamtbild aus diesen Streifen zusammengesetzt. Die genannten Patentschriften unterscheiden sich voneinander durch verschiedene Algorithmen, mit denen die Streifengrenze bestimmt werden, um möglichst nur Teile der Einzelbilder zusammenzufügen, die der Auflagefläche des Fingers entsprechen. Bildverfälschungen können jedoch bei den dort angegebenen Rechenverfahren nur begrenzt berücksichtigt werden.

Bei Betrachtung von mit diesen verschiedenen Verfahren aufgenommenen Bildern stellt man fest, daß manche Fingerlinien nicht vollständig zusammenpassen oder das Bild bei überlagernden Streifen, deren Bildinhalt gemittelt wird, verschmiert aussieht, was beispielsweise auf einen Verrutschvorgang des Fingers senkrecht zur Abrollbewegung zurückgeführt werden kann.

Man könnte daran denken, die Anpassung von Teilbildern mit mathematisch bekannten Algorithmen für Verschiebungen, Streckungen und Drehungen zu verbessern. Jedoch ist der Rechenaufwand bei derartigen mathematischen Verfahren so hoch, daß die Rechenzeit zur Anpassung der Vielzahl der Bilder, die beim Abrollprozeß aufgenommen werden, es bei den heutigen Prozessorgeschwindigkeiten unmöglich macht, die Bilder in einer Zeit, die vergleichbar mit der Abrollzeit ist, aufzunehmen und zu verwerten. Bei derartigen Rechenverfahren wäre es praktisch sinnvoller, einen Finger standardmäßig auf Papier abzurollen und das flächige, auf dem Papier vorhandene Fingerabdruckbild elektronisch weiterzuverarbeiten.

### Beschreibung der Erfindung

Deshalb ergibt sich die Aufgabe, sequentiell erfaßte Einzelbilder auf elektronische Weise so zu einem Gesamtbild zusammenzusetzen, daß Verfälschungen aufgrund unerwünschter Bewegungen des Abbildungsgegenstandes besser berücksichtigt werden als es bei streifenförmigen Aneinandersetzen von Teilbildern möglich ist, wobei das eingesetzte Verfahren auch bezüglich geringer Rechenzeiten im Vergleich zu den Bildaufnahmezeiten optimierbar sein soll.

Die Aufgabe wird ausgehend vom eingangs genannten Verfahren dadurch gelöst, daß eine gekrümmte Schnittlinie zur Bestimmung der Teilstücke von jedem außer dem ersten Bild durch Vergleich mit dem Bildinhalt des vorhergehend aufgenommenen oder zusammengesetzten Bildes $G_{i-1}$ ermittelt wird, mit der das Teilstück des Bildes $G_{i-1}$ begrenzt wird und das entsprechende Teilstück des Bildes $G_i$ nachfolgend an dieser Schnittlinie zum Bilden des Gesamtbildes G (x, y) angefügt wird, wobei diese Schnittlinie durch Bilden einer Ähnlichkeitsfunktion $G_c(x, y)$ zwischen den Bildern $G_i$ und $G_{i-1}$ ermittelt wird welche bei gleichen Grauwerten an gleichen Bildpunktkoordinaten oder auch unter Linschluß von deren Umgebung extremal wird und die Schnittlinie durch einen Kurvenverlauf y (x) gebildet wird, der durch mindestens ein Extremum höchster Ähnlichkeit der Ähnlichkeitsfunktion $G_c(x, y)$ verläuft.

Dementsprechend ist eine Vorrichtung ausgehend von der eingangs genannten Vorrichtung dadurch gekennzeichnet, daß die Schaltung der Bildverarbeitungseinrichtung dafür ausgelegt ist, zur Bestimmung der Teilstücke von jedem außer dem ersten Bild $G_i$ eine gekrümmte Schnittlinie durch Vergleich mit dem Bildinhalt des vorhergehend aufgenommenen, zusammengesetzten Bildes $G_{i-1}$ zu ermitteln, das Teilstück des Bildes $G_{i-1}$ durch diese Schnittlinie zu begrenzen sowie danach das entsprechende Teilstück des Bildes $G_i$ zum Bilden des Gesamtbildes G(x, y) an dieser Schnittlinie anzufügen und daß in der Schaltung ein Prozessor vorgesehen ist, der diese Schnittlinie durch Bilden einer Ähnlichkeitsfunktion $G_c(x, y)$ zwischen den Bildern $G_i$ und $G_{i-1}$ ermittelt, welche bei gleichen Grauwerten an gleichen Bildpunktkoordinaten oder auch unter Einschluß von deren Umgebung extremal ist und die Schnittlinie durch einen Kurvenverlauf y(x) bildet, der durch möglichst ein Extremum höchster Ähnlichkeit der Ähnlichkeitsfunktion $G_c(x, y)$ verläuft.

Im Gegensatz zum Stand der Technik wird hier eine gekrümmte Schnittlinie verwendet. Eine gekrümmte Schnittlinie ist wesentlich besser geeignet, die tatsächlichen Verhältnisse nachzubilden, da auch die Auflagefläche des Fingers keine geradlinigen Begrenzungen hat.

Nach Erkennen dieser Eigenschaft hätte man wegen der geforderten geringen Rechengeschwindigkeit Modellrechnungen für geeignete Schnittlinien statt der geraden Begrenzung der Streifen gemäß dem Stand der Technik anwenden können. Dieser Weg wurde hier allerdings nicht beschritten. Dagegen wird die Schnittlinie mittels einer Ähnlichkeitsfunktion gewonnen.

Ähnlichkeitsfunktionen sind in der Mathematik wohlbekannt. Hier seien beispielhaft vier unterschiedliche Funktionen angegeben, wobei sich der Buchstabe s auf eine Funktion, und e auf eine andere Funktion bezieht, zwischen denen die Ähnlichkeit mathematisch beschrieben wird. Die dreieckigen Klammern um die Variablen s und e bedeuten eine Mittelwertbildung um eine vorgegebene Umgebung eines Bildpunktes, über die dann auch die durch die Summenzeichen angegebenen Summierungen durchgeführt werden. Die Funktionen e und s sind dabei von den Koordinaten x und y abhängig, wenn dies auch nicht expliziert angegeben ist.

1. Kreuzkorrelationsfunktion:

$$r_{xy} = \frac{\sum (e_i - \langle e \rangle) \cdot (s_i - \langle s \rangle)}{\sqrt{\sum_i (e_i - \langle e \rangle)^2 \sum (s_i - \langle s \rangle)^2}}$$

2. Summe der quadratischen Differenzen:

$$d_{xy} = \sum_i (s_i - e_i)^2$$

3. Summe der Differenzfunktion:

$$d_{xy} = \sum_i |s_i - e_i|$$

4. Summe der mittelwertfreien Differenzen:

$$d_{xy} = \sum_i |s_i - e_i - \langle s \rangle + \langle e \rangle|$$

Bei der Kreuzkorrelationsfunktion steht im Nenner die mittlere quadratische Abweichung vom Mittelwert, die durch Quotientenbildung aufgrund des Ausdrucks im Zähler mit der wirklichen Abweichung in jedem Punkt verglichen wird. In Bereichen, in denen keine Struktur vorhanden ist, ist der Nenner ein Maß für das Rauschen, das somit mit dem Rauschen an jedem Bildpunkt verglichen wird. Die Kreuzkorrelationsfunktion erhält in solchen Bereichen einen Wert der Größenordnung 1. Der Wert kann noch höher werden, wenn die Abweichung im Zähler aufgrund von unterschiedlichen Strukturen in den durch e und s dargestellten Bildern wesentlich höher als das Rauschen wird. Bei ausgeprägt gleichen Strukturen wird der Einzelwert gleich dem Mittelwert und zwar bei beiden Funktionen s und e, so daß die Kreuzkorrelationsfunktion gegen den Wert 0 geht, bei dem also die höchstmögliche Ähnlichkeit vorliegt.

Diese Kreuzkorrelationsfunktion ist aber vor allen Dingen aufgrund der Wurzel und dem Quotienten rechenintensiv. Die zweite angegebene Ähnlichkeitsfunktion ist dagegen schneller zu verarbeiten, denn sie vergleicht direkt die beiden Funktionen s und e. Bei starker Abweichung in den Strukturen wird der Funktionswert d sehr groß, was unter anderem auf das Quadrat zurückzuführen ist. Bei Übereinstimmung der Strukturen geht der Wert d gegen 0. Der Wert von d ist wegen der Quadratbildung auf ein Minimum von Null begrenzt.

Die dritte angegebene Ähnlichkeitsfunktion ist ähnlich gestaltet wie die vorher beschriebene. Sie enthält eine Summe über die Absolutwerte von Differenzfunktionen der Funktionen s und e, hat also ein ähnliches Verhalten wie die vorhergehende. Rechnerisch ist sie aber schneller zu behandeln, da keine Quadrate gebildet werden müssen. Diese Funktion steigt allerdings wegen der fehlenden Quadrate bei Unähnlichkeit nicht so stark an wie die vorhergehende. Dies ist aber hier irrelevant, da erfindungsgemäß auf maximale Ähnlichkeit abgestellt wird, man sich also beim Rechnen im wesentlichen im Minimum der Ähnlichkeitsfunktionen bewegt.

Die letzte angegebene Funktion vergleicht die Abweichungen von Mittelwerten der Funktionen s und e. Dadurch wird ein konstanter Anteil in der betrachteten Umgebung kompensiert und die Schwankungen in der Struktur treten in der Ähnlichkeitsfunktion stärker hervor. Bei fehlender Ähnlichkeit steigt also auch diese Funktion stärker als die vorhergehend genannte an. Da sich das erfindungsgemäße Verfahren allerdings auf maximale Ähnlichkeit bezieht, ist in den zur Auswertung von Fingerabdrücken interessierenden Bereichen <s> ungefähr <e>, so daß hier im Ergebnis auch keine großen Abweichungen gegenüber der vorhergehenden Funktion zu erwarten sind.

Die Diskussion zeigt, daß es im wesentlichen gar nicht auf die Wahl der Ähnlichkeitsfunktion selbst ankommt. Jede Funktion, die bei gleichen Strukturen einen Extremalwert liefert und bei Abweichungen zwischen den Strukturen einen vom Extremum abweichenden Wert annimmt, ist für das erfindungsgemäße Verfahren geeignet.

Aufgrund der Vielzahl der möglichen Funktionen, läßt sich auch unter verschiedensten Randbedingungen immer eine Funktion finden, mit der die Rechenzeit optimiert werden kann. Damit ist erfindungsgemäß auch die in der Aufgabe verlangte Optimiermöglichkeit erfüllt.

Man könnte sich zur Bestimmung der Schnittlinie auf nur wenige Extremalpunkte beziehen, um die Rechenzeit gering zu halten. Beispielsweise könnte man zur Ermittlung der Schnittlinie ein Polynom durch ausgewählte Extrempunkte legen, wobei die Extrempunkte beispielsweise an der oberen Bildgrenze, der unteren Bildgrenze und der Mitte gewählt werden und das Polygon eine Parabel ist.

Ein verbessertes Ergebnis, das unerwarteterweise unter Verwendung geeigneter Algorithmen schneller arbeitet als eine Polynomnäherung, ist gemäß einer bevorzugten Weiterbildung der Erfindung dadurch gegeben, daß für den Kurvenverlauf y(x) eine Schnittlinie bestimmt wird, bei dem die Summe der Werte der Ähnlichkeitsfunktion $G_C$ (x, y(x)) über den kurvenverlauf y (x) bezüglich der Ähnlichkeit extremal wird.

Die Verbesserung in der Anpassung der Teilbilder ist möglicherweise darauf zurückzuführen, daß der gesamte Kurvenverlauf durch ein einziges durch Summenbildung gewonnenes Extremum bestimmt ist, statt nur durch einige Extremwerte an einzelnen Punkten wie bei der beispielhaft genannten Polynomnäherung.

Die erhöhte Rechengeschwindigkeit kann vielleicht so erklärt werden, daß hier einfach eine Summe gebildet wird, statt der vorher genannten beispielhaften Polynomennäherung für eine Schnittlinie, welche die Anpassung von n Koeffizienten mit Bildung von Potenzen von n für ein Polynom n-ten Grades erfordern würde.

Insbesondere reduziert sich die Rechen- und Speicherzeit gemäß einer vorzugsweisen Weiterbildung dadurch, daß die Ähnlichkeitsfunktion bei Ähnlichkeit des Bildinhalts der zu vergleichenden Bilder minimal wird, daß ein Minimum für die Schnittlinie durch das Bellman-Verfahren gewonnen wird, bei dem der durch Bildpunkte j gekennzeichnete Verlauf $y_j(x_i)$ jeweils für dasjenige $y_j$ bei den zugeordneten $x_i$ ausgewählt wird, für das eine Summe S(x, y) über dem Gesamtgebiet minimal ist, die sich aus den vorherigen Summenwerten $S(x_{j-t}, y_j)$ rekursiv ergibt durch:

$$S(x_1, y_i) = G_C(x_1 y_i),$$

den Startwert k = 1, und
für k>1 :

$$S(x_k, y_i) = G_C(x_k, y_i) + \min \{ S(x_{k-1}, y_v) : i-1 \leq v \leq i+1 \}.$$

Dieses Verfahren wird nachfolgend anhand eines Ausführungsbeispieles noch näher verdeutlicht.

Gemäß dem erfindungsgemäßen Verfahren könnte man zur Bestimmung der Schnittlinien zweier Teilbilder Ähnlichkeitsfunktionen aus den beiden Einzelbildern gewinnen. Dies könnte aber Unbestimmtheiten verursachen, wenn die Schnittlinie zweier Einzelbilder die Schnittlinie der vorhergehenden zwei Schnittbilder überkreuzt, wie es ja möglich ist, weil sich ein Finger beim Abrollen verformt. Diese Schwierigkeiten werden bei einer bevorzugten Weiterbildung der Erfindung dadurch vermieden, daß für den Zeitpunkt $t_i$ ein momentanes Gesamtbild $G_M$ aus allen vorangehenden Teilbildern $G_k$ (k<i) zusammengefügt wird und daß die Ähnlichkeitsfunktion mit diesem momentanen Gesamtbild $G_M$ durch Vergleich mit dem am Zeitpunkt $t_i$ aufgenommenen Teilbild $G_i$ gebildet wird.

Das gemäß der Weiterbildung gekennzeichnete Verfahren ist für die Optimierung einer Echtzeitberechnung bei minimalem Speicher besonders geeignet, da nicht alle Einzelbilder bis zum Ende des Abrollprozesses abgespeichert werden müssen, wonach sie dann zusammengefügt werden. Hier wird nur das momentane Teilbild $G_M$ fortgesetzt, das schon nach Abschluß des Abrollprozesses sowie der rechnerischen Berücksichtigung des letzten aufgenommenen Teilbildes das gewünschte Gesamtbild der Oberfläche darstellt.

Wie vorstehend schon deutlicher wurde, sind bestimmte Ähnlichkeitsfunktionen für die rechnerische Behandlung besonders geeignet. Dazu gehören gemäß einer bevorzugten Weiterbildung der Erfindung solche, bei denen die Ähnlichkeitsfunktion eine dem Absolutbetrag der Differenz selbst oder der Differenz der Abweichung vom Mittelwert der Grauwerte proportionale Funktion ist, die über eine Umgebung von N×M Bildpunkte gemittelt wird, wobei das zu suchende Extremum ein Minimum ist Zu solchen Funktiorien zählen beispielsweise die vorher angegebenen Funktion $r_{xy}$ und $d_{xy}$.

insbesondere ist gemäß einer vorteilhaften Weiterbildung des Verfahrens vorgesehen, daß eine die Ähnlichkeit zweier Funktionen $F_1$ und $F_2$ beschreibende Ähnlichkeitsfunktion $G_c$ durch den Ausdruck

$$G_C(x_i, y_k) = \sum_{\nu=-N/2}^{N/2} \sum_{\mu=-M/2}^{M/2} \left[ \left[ F_1(x_{i+\nu}, y_{k+\mu}) - m_1(x_i, y_k) \right] - \left[ F_2(x_{i+\nu}, y_{k+\mu}) - m_2(x_i, y_k) \right] \right]$$

gebildet wird, wobei

$$m_{1,2}(x_i, y_k) = \frac{1}{(N+1)\cdot(M+1)} \sum_{\nu=-N/2}^{N/2} \sum_{\mu=-N/2}^{N/2} F_{1,2}(x_{i+\nu}, y_{k+\mu})$$

oder Null ist,
und für jeden n-ten Zeitpunkt $t_n$ insbesondere $F_1 = G_n$ und $F_2$ gleich $G_{n-1}$ oder die Grauwertfunktion eines aus allen vorhergehenden Teilbildern $G_m(m<n)$ zusammengefügten Gesamtbildes gesetzt wird.

Diese Angaben über die Ähnlichkeitsfunktion entsprechen der oberen Nomenklatur der Summe der Differenzfunktion und der Summe der mittelwertfreien Differenzen. Wie vorstehend schon ausgeführt wurde, sind diese insbesondere für die Minimierung der Rechenzeit besonders vorteilhaft.

Die Summierung über die Umgebung von N x M Bildpunkten wird durchgeführt, um lokale Strukturwerte, wie sie beispielsweise bei den Fingerlinien der Fingerkuppe gegeben sind, für die Festlegung des optimalen Weges auszugleichen. Weiter werden Rauschbeiträge durch das Summieren verringert.

Bei weniger verrauschten Einzelbildern läßt sich die Rechenzeit weiter erniedrigen. Den Ausgleich bezüglich minimaler Strukturen erreicht man nämlich nicht nur, wenn die Schrittweite 1 bei der Summierung, wie üblich, eingehalten wird, also alle benachbarten Bildpunkte zur Summenbildung beitragen, sondern wenn eine größere Schrittweite gewählt wird, also beispielsweise nur jeder zweite, vierte und sechste Bildpunkt, zum Summieren über die Umgebung verwendet wird. Zur Reduzierung der Rechenzeit ist deswegen gemäß einer bevorzugten Weiterbildung der Erfindung vorgesehen, daß bei mindestens einer Summenbildung die Schrittweite größer als ein Bildpunktabstand ist.

Wie vorstehend näher ausgeführt wurde, ist es besonders günstig, wenn kleinere Strukturen zu der Ähnlichkeitsfunktion nur wenig beitragen. Deswegen wird die Struktur mittels einer Summierung über $N \times M$ Bildpunkte "ausgeschmiert" oder ausgeglichen. Demgemäß ist bei einer bevorzugten Weiterbildung der Erfindung vorgesehen, daß für N und M ein Wert gewählt wird, der größer als eine und insbesondere mehr als zwei Breiten von den in den Bildern auftretenden minimalen Strukturen ist, wobei die minimale Struktur bei einer Fingerabdruckerfassung der mittlere Abstand zwischen benachbarten Fingerlinien ist.

Die Berücksichtigung von zwei Breiten von den in den Fingerbildern minimalen Strukturen bedeutet eine optimale Verschmierung der Strukturen bei minimaler Rechenzeit, wie man sich mit Hilfe des bekannten Abtasttheorems verdeutlichen kann. Das Vorsehen von nur einer Breite der in den Bildern auftretenden minimalen Strukturen hat sich aber für die Praxis ebenfalls als geeignet erwiesen und ist bei verringerter Strukturverschmierung vor allem optimal, um die Rechenzeit gering zu halten.

Wie dem Fachmann einsichtig sein wird, hängt die Rechenzeit im wesentlichen von der Anzahl der zu berücksichtigenden Bildpunkte beim Bildvergleich ab. Um die Bildpunktzahl für die nachfolgenden Rechenverfahren drastisch zu verringern, ist die Berechnung einer Maske vorgesehen, die den in beiden Bildern gleichzeitig sichtbaren Bereich des Fingers markiert. Hierzu werden beide Bilder zunächst binarisiert, und es wird jeweils die umschließende Kontur der schwarzen Bildpunkte bestimmt. Die logische UND-Verknüpfung der konturierten Gebiete zweier Bilder liefert die erwähnte Maske, welche die Bildbereiche maskiert, in denen später Ähnlichkeitsfunktion und die Schnittkurve bestimmt werden.

Die Berechnung einer Maske bedeutet zwar zusätzliche Rechenzeiten, es hat sich aber herausgestellt, daß die Rechenzeit durch die Verringerung der Bildpunktzahl in den nachfolgenden Schritten drastisch reduziert wird, wohingegen der zusätzliche Rechenaufwand, der insbesondere auf UND- und ODER-Verknüpfungen beruht, vernachlässigbar wird.

Weiter läßt sich die Rechenzeit stark reduzieren, wenn die Anzahl der Bilder verringert wird. Beim beispielhaft genannten Abrollen des Fingers zur Aufnahme von Fingerabdrücken kann die Bildpunktanzahl aber stark variieren, je nachdem wie schnell der Finger abgerollt wird. Um die Bildanzahl auf ein vernünftiges Maß zu begrenzen, ist gemäß einer vorzugsweisen Weiterbildung der Erfindung vorgesehen, daß für jedes aufgenommene Bild ein Schwerpunkt bestimmt wird und ein Bild mit einem Schwerpunktabstand zum vorhergehenden als $G_i$ abgespeicherter Bild, der kleiner als ein vorgegebener Vergleichsabstand ist, verworfen wird, also nicht als $G_{i+1}$ abgespeichert und bei der Bildung des Gesamtbildes nicht berücksichtigt wird.

Insbesondere bei der Fingerabdrucktechnik hat es sich als ausreichend herausgestellt, wenn maximal fünfzig Bilder aufgenommen werden, so daß gemäß einer anderen Weiterbildung des erfindungsgemäßen Verfahrens vorgesehen wird, daß der vorher gegebene Vergleichsabstand so gewählt ist, daß bei bestimmungsgemäßem Einsatz des Verfahrens maximal 50 Bilder aufgenommen werden.

Die vorhergehend beschriebenen Weiterbildungen enthielten Schwerpunktberechnungen, die allerdings je nach geforderter Rechengenauigkeit sehr aufwendig sein können. Zur Verringerung der Rechenzeit wird gemäß einer vorteilhaften Weiterbildung der Erfindung vorgeschlagen, daß schon während der Bildauslesung für jede Zeile ein Zeilenschwerpunkt berechnet wird und anschließend als Schwerpunkt des jeweiligen Bildes der Mittelwert der Zeilenschwerpunkte über alle Zeilen eingesetzt wird.

Wie aus den vorstehenden Ausführungen schon deutlich geworden sein wird, eignet sich dieses Verfahren besonders zum Aufnehmen von Fingerabdrücken durch Abrollen. Demgemäß ist erfindungsgemäß auch eine Anwendung des Verfahrens in der vorstehend genannten Vorrichtung zur elektronischen Bildaufnahme und Bildverarbeitung von Fingerabdrücken vorgesehen.

## Kurze Beschreibung der Zeichnungen

Die Erfindung wird nachfolgend anhand von Ausführungsbeispielen unter Bezugnahme auf die Zeichnung noch näher beschrieben. Es zeigen:

Fig.1      eine schematische Darstellung einer Vorrichtung zur Aufnahme von Fingerabdrücken;

Fig.2      eine schematische Darstellung zur Verdeutlichung der Aufnahme von Einzelbildern beim Abrollen eines Fingers einschließlich der Bildauswahl;

Fig.3      ein schematisch illustriertes Ausführungsbeispiel für ein Verfahren zum Zusammensetzen von Teilbildern zu einem Gesamtbild;

Fig.4      ein Beispielprogramm zur Berechnung des extremalen Pfades.

## Ausführliche Beschreibung der Zeichnungen

Das vorher genannte Verfahren und die Vorrichtung sind für alle Anwendungsfälle geeignet, bei denen aus Teilbildern ein Gesamtbild zusammengesetzt werden soll. Hier soll die Erfindung jedoch ausschließlich beispielhaft anhand einer Aufnahme von Fingerabdrücken beim Abrollen und gleichzeitiger Aufnahme von Einzelbildern näher erläutert werden.

Bei der bekannten Fingerabrolltechnik wird üblicherweise ein Glaskörper 2, vorzugsweise in Form eines Prismas, eingesetzt, um auf einer Fläche 6 einen abzubildenden Finger 8 abzurollen. Ein Lichtbündel 4 wird dabei durch den Glaskörper 2 von unten auf die Fläche 6 gerichtet. Der Winkel des Lichtbündels 4 ist so gewählt, daß an der Fläche 6 Totalreflektion stattfindet. Dadurch werden die Fingerrillen zwischen den Fingerlinien des beispielhaft gezeigten Fingers 8 im total reflektierten Lichtbündel 10 hell erscheinen, während an Stellen an denen Fingerlinien aufliegen, die Totalreflexion gestört ist und das Licht aus der Fläche 6 entweichen kann. Die Fingerlinien werden also, wie beim Abrollen mit Tinte, dunkler sein als die Umgebung. Mit einer Kamera 12, insbesondere einer CCD-Kamera, wird dieses Schwarzweißbild der Fingerlinien von der Oberfläche 6 aufgenommen. Wie bei CCD-Kameras üblich, wird der Bildinhalt $G_i(x,y)$ zeilenweise aus einer CCD-Matrix ausgelesen. Die ausgelesenen Grauwerte werden danach über ein Interface 14 einer Bildverarbeitungseinrichtung 16 zugeführt. Die Kamera 12 ist dabei so ausgerichtet, daß die Abrollrichtung der Zeilenrichtung x der CCD-Matrix zugeordnet ist. Diese Ausrichtung erlaubt es dem Interface 14, beim Auslesen jeweils einer Zeilen gleich deren Schwerpunkt mit Hilfe eines Prozessors zu berechnen, indem aus den Produkten von Grauwert und dazugehöriger x-Koordinate ein Mittelwert gebildet wird. Die derart bestimmten Zeilenschwerpunkte können dann von der Bildverarbeitungseinrichtung 16 weiter verarbeitet werden.

Die Kamera 12 speichert den momentanen Bildinhalt bei jeder Aufnahme in CCD's, die dann sequentiell ausgelesen werden. Das bedeutet, der gesamte Abrollprozeß des Fingers 8 auf der Fläche 6 liegt als Vielzahl von Bildern vor, die jeweils als Grauwertfunktion $G_i(x, y)$ dargestellt werden können, wobei sich der Index i auf das jeweilige Einzelbild bezieht. Ferner sind die Koordinaten x und y die Zeilen- und Bildrichtung bei der Auslesung aus der CCD-Matrix und G der jeweilige Grauwert des Einzelbildes an den angegebene Koordinaten x und y.

Demgemäß ist der schon beschriebene Schwerpunkt in Zeilenrichtung durch den Ausdruck $< G_i(x, y)\, x >_x$

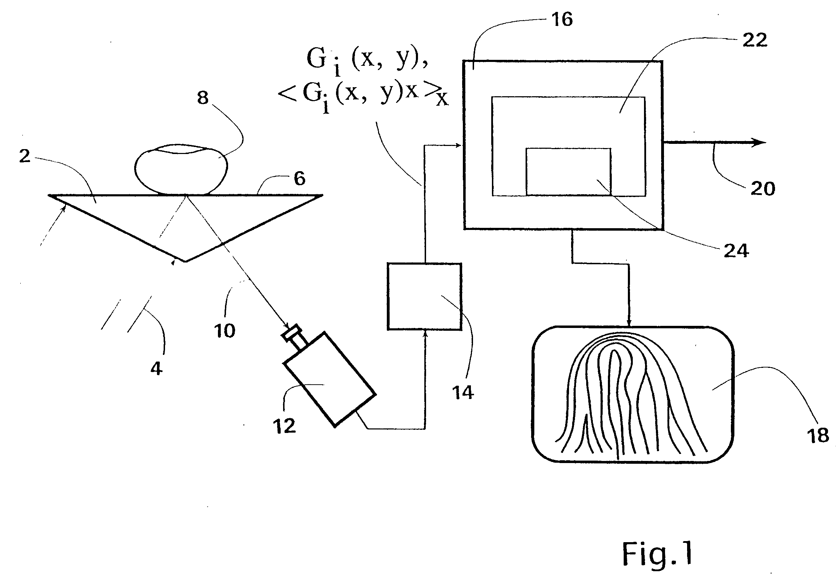

gekennzeichnet. Der Transfer dieser Funktionen und der Grauwertfunktion ist in Fig.1 zeichnerisch angedeutet.

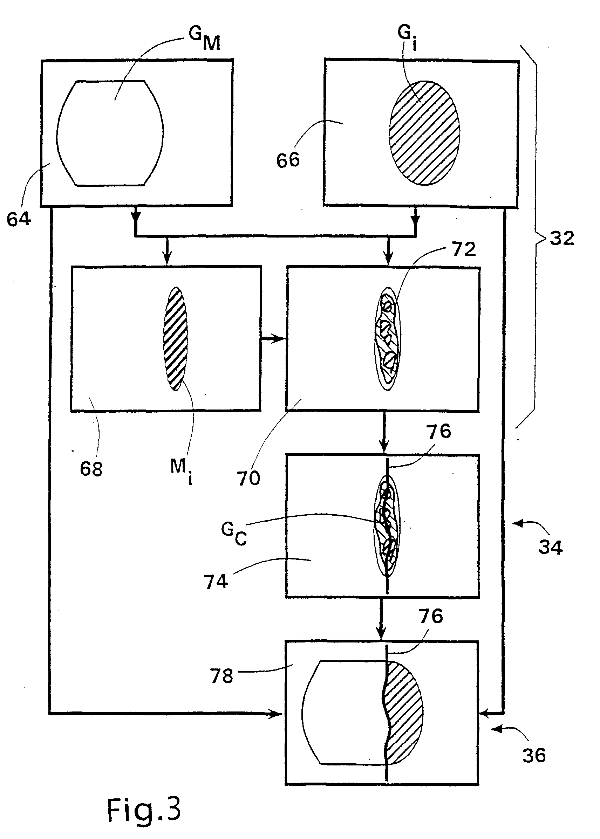

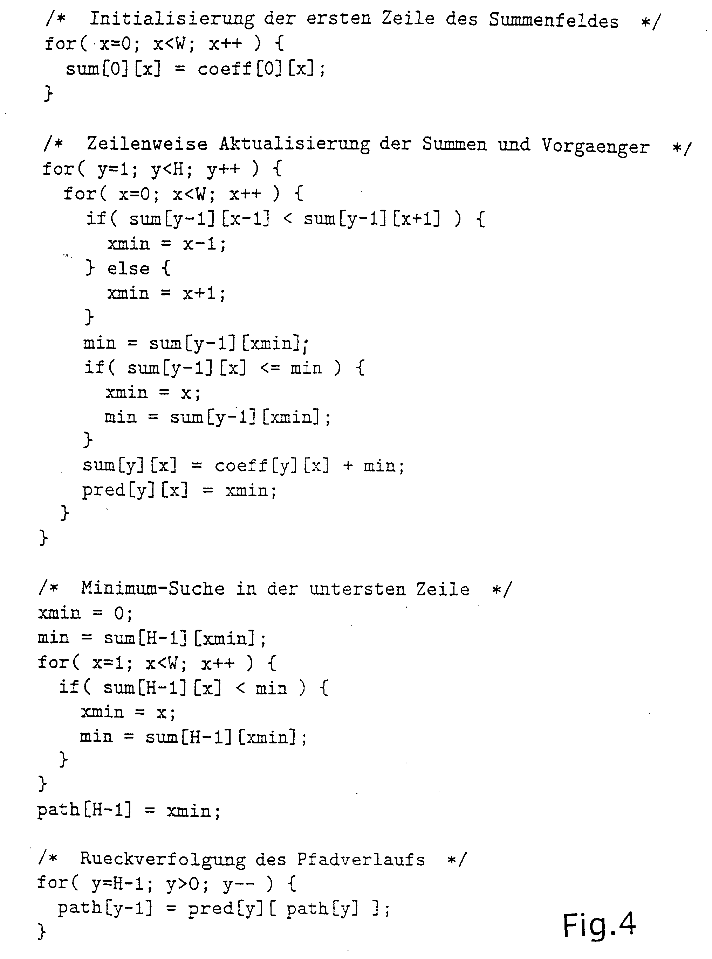

Die Bildverarbeitungseinrichtung 16 verwendet die ihr übermittelten Daten einmal zur Darstellung des momentanen Abrollbildes $G_M$, das am Ende das Gesamtbild G ergibt, auf einem Monitor 1 8, auf dem auch weitere Informationen dargestellt werden, wie die Güte des Abrollprozesses, damit der Nutzer entscheiden kann, ob der aufgenommene Fingerabdruck verwertbar ist. Die Güte bestimmt sich beispielsweise aus den Extremalwerten für den Pfad, wie er erfindungsgemäß ermittelt wird und nachfolgend anhand der Fig.3 und Fig.4 noch näher erläutert wird.

Weiter hat die Bildverarbeitungseinrichtung 16 noch eine Ausgabemöglichkeit 20, mit der Fingerabdruckdaten auch ausgedruckt oder an andere Stellen übermittelt werden können. Es hat sich nämlich gezeigt, daß es günstiger ist, aufgenommene Fingerabdrücke von vermutlichen Straftätern von der Vorrichtung aus, insbesondere mittels eines Modems, direkt an ein Zentralregister zu übersenden und dort mit abgespeicherten Daten zu vergleichen, als wenn der Fingerabdruck erst ausgedruckt werden muß und anschließend per Fax oder Post versandt wird.

Die Bildverarbeitungseinrichtung 16 enthält im wesentlichen eine Schaltung 22, in der die Daten von Einzelbildern $G_i$ (x, y) zu einem Gesamtbild vereinigt werden und zur Darstellung auf dem Monitor 18 und zur Erzeugung von Signalen für die Ausgabeeinrichtung 20 aufbereitet werden. Zu den nachfolgend näher beschriebenen Verfahrensschritten, die unter anderem auf mathematischen Operationen beruhen, ist in der Schattung 22 ferner ein Prozessor 24 angeordnet, mit dem Rechenoperationen einfach ausgeführt werden können.

Es hat sich gezeigt, daß die Rechengeschwindigkeit üblicher PCs ausreicht, um bei dem nachfolgend beschriebene verfahren, das auch auf Rechenzeit optimiert ist, eine Auswertung in Zeitabschnitten vorgenommen werden kann, die vergleichbar mit der Aufnahmezeit eines Fingerabdrucks von ungefähr 2 bis 5 Sekunden sind.

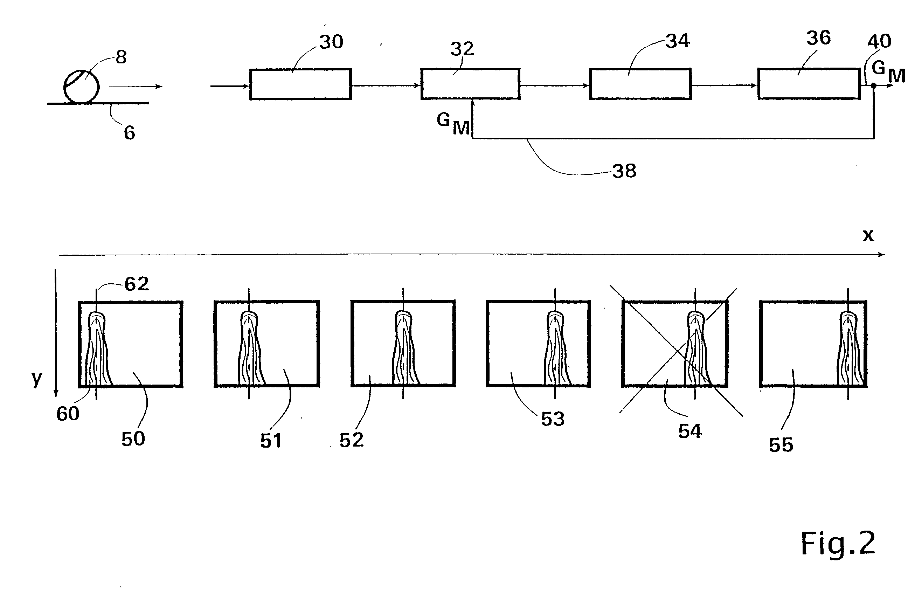

In Fig.2 sind einzelne Verfahrensschritte, die vom Prozessor 24 in der Schaltung 22 durchgeführt werden, schematisch dargestellt. Der Finger 8 wird beim Abrollen auf der Abrollfläche 6 sequentiell in mehreren Einzelbildern $G_i$ (x, y) aufgenommen, was durch den Block 30 näher bezeichnet ist. Der nachfolgende Block 32 beinhaltet die Berechnung einer Ähnlichkeitsfunktion, wonach im Block 34 ein Pfad gesucht wird, mit dem die Teilbilder aneinandergefügt werden. Anschließend werden die Teilbilder im Block 36 zu einem Gesamtbild zusammengefügt.

Insbesondere wird dabei im Block 32 eine einleitend schon erläuterte Ähnlichkeitsfunktion nicht aus aufeinanderfolgenden Bildern gewonnen, sondern jedes Einzelbild mit dem momentanen Gesamtbild $G_M$ für alle Bilder, die vorher verfahrensgemäß aneinander gefügt wurden, verglichen. Dies ist in Figur 2 durch eine Rückleitung 38 für das momentane Gesamtbilds $G_M$ dargestellt. Das momentane Gesamtbild $G_M$ ist am Ende des Verfahrens gleich dem zu gewinnenden Gesamtbild G, nachdem alle Teilbilder zusammengefügt wurden. Es wird beispielsweise auf dem Monitor 18 dargestellt oder über die Ausgabe 20 versandt.

Die einzelnen Schritte werden nun nachfolgend näher beschrieben. Im unteren Teil der Fig.2 sind zur näheren Erläuterung der Arbeitsweise des Blocks 30 sechs Teilbilder 50, 51, 52, 53, 54 und 55 gezeigt. Weiter ist die dazugehörige Koordinatenachse x in Abrollrichtung und y, senkrecht dazu, angedeutet.

Die einzelnen Bilder 50, 51, 52, 53, 54 und 55 zeigen in der schematischen Darstellung immer eine gleiche Struktur 60. Dies entspricht nicht den wahren Verhältnissen beim Abrollen, da durch Aufdrücken des Fingers mit unterschiedlichem Druck unterschiedliche Formen der Strukturen 60 entstehen. In Fig.2 wurden jedoch zur schematischen Darstellung die gleichen Strukturen 60 gezeigt, damit eine Auswahl von Sequenzbildern verdeutlicht werden kann, die eingesetzt wurde, um die Anzahl der zu verwertenden Einzelbilder unabhängig von der Schnelligkeit des Abrollens des Fingers 8 auf der Fläche 6 zu beschränken.

Dazu wird eine mittlere Schwerpunktlinie 62 gebildet. Der Ort dieser Linie in x-Richtung liegt an der Stelle, die durch

$$\frac{\sum_k \sum_i G(x_i, y_k) x_i}{\sum_k \sum_i G(x_i, y_k)},$$

den über y gemittelten Zeilenschwerpunkten $<G(x,y) x>_x$ gegeben ist. Dieser Ort ist in den Bildern 50 bis 55 jeweils mittels einer unterbrochenen Linie 62 gekennzeichnet.

Für die Auswahl der zu verwertenden Einzelbilder werden jeweils die Lagen der Schwerpunktlinien 62 von aufeinander folgenden Teilbildern verglichen. Ist der Abstand zwischen vorgegebenem Einzelbild 54 und dem vorhergehenden Bild 53 kleiner als ein bestimmter Schwellwert, werden die Daten des Einzelbildes 54 verworfen, wie durch das Durchkreuzen in Fig.2 angedeutet ist. Aufgrund des Fehlens des Einzelbildes 54 werden zur Bildung der Ähnlichkeitsfunktion im Block 32 nur die Einzelbilder 50, 51, 52, 53 und 55 weiterverarbeitet. Dabei erfolgt die Zählung des Index i unter Auslassung des Einzelbildes 54. Das Einzelbild 55 erhält also als Index i den imkremetierten Wert des Index des Einzelbildes 53.

Die so aufgenommenen Bilder mit der Funktion $G_i$ (x, y) werden danach einem Ähnlichkeitstest in Block 32 und einer Pfadsuche in Block 34 unterworfen, wie sie anhand der Fig.3 noch näher ausgeführt werden.

In Fig.3 ist die Kontur eines momentanen Gesamtbildes $G_M$ in einem Block 64 gezeigt, das aus allen Teilbildern bis zu $G_{i-1}$ zusammengesetzt wurde, das mit den folgend beschriebenen Verfahrensschritten durch das im Block 66 als Kontur schematisch dargestellte Einzelbild $G_i$ ergänzt wird.

Die Bilder in den Blöcken 64 und 66 werden zunächst mit einem geeigneten Schwellwert binarisiert. Anschließend wird in jedem der daraus resultierenden Bilder eine geschlossene Kontur gesucht, die jeweils alle binarisierten Bildpunkte umschließt. Gängige Verfahren hierfür sind aus der Bildverarbeitungsliteratur bereits bekannt. Die logische UND-Verknüpfung der konturierten Gebiete liefert dann den Wert 1 für Punkte innerhalb der gesuchten Maske $M_i$ (Bild 68), während die restlichen Bildpunkte den Wert 0 bekommen. $M_i$ bestimmt somit den Arbeitsbereich für Ähnlichkeitsanalyse und Pfadsuche.

Diese Maske wird berechnet, indem eine Kontur ermittelt wird, deren Absolutbetrag von der Differenz der Bilder $G_i$ und $G_M$ gleich einem bestimmten Schwellwert ist, beziehungsweise sich bezüglich des Bildpunktnachbars durch Über- bzw. Unterschreiten des Schwellwerts ändert, wobei im Bereich innerhalb der Kontur bei zeilenmäßiger Abfrage die Werte logisch Eins und außerhalb der Kontur der Wert Null zugeordnet werden. Derartige Verfahren sind aus dem technischen Gebiet der Softwareentwicklung bekannt.

Die logischen Werte der Maske $M_i$ werden anschließend auf den Absolutbetrag der Differenz der Bildinhalte von $G_M$ und $G_i$ angewandt, so daß ein markiertes Bild entsteht, wie es innerhalb von Block 70 dargestellt ist. Bildpunkte außerhalb der Kontur werden auf den durch die Darstellung in dem Bild 70 möglichen binären Maximalwert gesetzt.

In dem in Block 70 gezeigten Bild sind auch Strukturen 72 schematisch dargestellt, wie sie in ähnlicher Weise auch bei Fingerabdrücken auftreten. Allerdings würden auch noch kleinere Strukturen wie die Fingerlinien, auftreten welche die nachfolgend anhand von Block 74 gezeigte Pfadsuche stören würden. Deshalb wird im Bild 72 jeder Bildpunkt um eine durch M*N Bildpunkte vorgegebene Umgebung gemittelt. Somit ergibt sich als im Ausführungsbeispiel verwendete Ähnlichkeitsfunktion:

$$G_C\left(x_i, y_k\right) = \sum_{v=-N/2}^{N/2} \sum_{\mu=-M/2}^{M/2} \left\| \left[G_M\left(x_{i+v}, y_{k+\mu}\right)\right] - \left[G_i\left(x_{i+v}, y_{k+\mu}\right)\right] \right\|$$

Mit M und N = 8 wurden die aufgrund der Fingerlinien gegebenen Strukturen hinreichend gut ausgeglichen. Die Pfadsuche in dem Ähnlichkeitsbild, das dann einen extremalen Pfad 76 liefert, wird nachfolgend im Einzelnen erläutert.

Die hier verwendete Ähnlichkeitsfunktion hat bei ähnlichen Funktionen den Extremalwert 0, es ist hier also zur Ermittlung des extremen Pfades eine Minimumsuche durchzuführen. Beim Ausführungsbeispiel wurde dies nach dem Belman-Verfahren vorgenommen. Dieses Verfahren ist im einzelnen in den Artikeln von R. Bellman, "Dynamic Programming", Princeton University Press, Princeton, N.J., 1957, und R. Bellman "Dynamische Programmierung und selbstanpassende Regelprozesse", R. Oldenbourg Verlag, München, 1967, beschrieben worden. Es besteht im wesentlichen darin, daß ein Koeffizientenfeld mit dem Bild 72 beschrieben wird. Die erste Zeile wird danach nicht mehr verändert, die zweite und folgenden Zeilen werden fortlaufend rekursiv summiert und zwar dadurch, daß zu jedem Wert in der behandelten Zeile der kleinste Nachbar der vorhergehenden Zeile hinzu addiert wird. Nachdem dies Zeile für Zeile durchgeführt worden ist, stehen in der letzten Zeile die Summen für minimale Pfade. Davon wird die kleinste Summe ausgesucht und für angrenzende Felder mit den kleinsten Summen zurückverfolgt, wodurch der gesuchte Pfad als Funktion y (x) festgelegt ist.

Dieses Verfahren ist hinreichend genau und arbeitet sehr effizient. Es könnten Probleme auftreten, wenn der Pfad konstante Bereiche im Ähnlichkeitsbild passieren sollte, weil dabei der Verlauf nicht eindeutig festgelegt ist. Der Algorithmus liefert aber in jedem Fall einen eindeutigen Pfadverlauf für das Verfahren, denn in Bereichen in denen die Ähnlichkeitsfunktion konstant ist, ist für die Fingerabdruckrekonstruktion jeder Pfad als gleich gut zu bewerten.

Zur Verdeutlichung des Verfahrens ist in Fig.4 beispielhaft ein in der Programmiersprache C geschriebenes Beispielprogramm angegeben, das dem Fachmann noch deutlicher macht, wie dieses Verfahren arbeitet.

Dabei haben die angegebenen Variablen die folgende Bedeutung:

| | |
|---|---|
| coeff [H] [W] beginnt bei 0) | Koeffizientenfeld (Ähnlichkeitsbild $G_c$, die Feldindizierung |
| sum [H] [W] | Summenfeld (Koeffizientensummen) |
| pred [H] [W] | Feld von Vorgänger-Punkten |
| path [H] | x-Koordinaten des optimalen Pfades (Nahtstellen) |

(fortgesetzt)

| min | Hilfsvariable (minimale Summe) |
|---|---|
| xmin | Hilfsvariable (x-Koordinate des Minimums) |

Der Pfad 76 wird danach, wie es in dem Block 78 gezeigt ist, verwendet, um das Bild $G_M$ an der rechten Seite sowie das Bild $G_i$ an der linken Seite abzuschneiden, und beide Teile zusammenzufügen, um ein neuen Gesamtbild $G_M$ zu bilden.

Nach Aufsammeln aller Einzelbilder $G_i$ erhält man so ein Gesamtbild G (x, y) das dem abgerollten Fingerabdruck besser entspricht als es nach dem Stand der Technik möglich ist, bei dem die $G_i$ geradlinig beschnitten und aneinander gefügt wurden.

Von dem Ausführungsbeispiel kann in vielfältiger Weise abgewichen werden. Bei einem sehr schnellen Prozessor oder einem Transputernetzwerk, welches eine schnellere Parallelverarbeitung von Bildpunkten gestattet, kann beispielsweise auf die Maskierung mit der Maske $M_i$ verzichtet werden, wobei also das Gesamtbild $G_i$ im Block 70 ohne Maskierung verwendet wird. Weiter ist es auch möglich, bei entsprechend kleinen oder großen Rechengeschwindigkeiten, den Schwellwert für die Bildauswahl, wie sie anhand von dem unteren Teil von Fig.2 beschrieben wurde, für mehr oder weniger Bilder auszuwählen.

Im Ausführungsbeispiel wurde der Schwellwert so festgelegt, daß die zu verarbeitende Bildmenge ungefähr 50 Bildern entsprach. Damit konnten abgerollte Fingerabdrücke mit hinreichender Genauigkeit innerhalb von 10 Sekunden berechnet und abgebildet werden.

Eine noch weitere Verkleinerung der Prozessorzeiten kann einmal durch schnellere Prozessoren, Netzwerke, wie beispielsweise Transputern; oder aber auch durch Optimierung von Schwellwerten und Parametern wie den Zahlen M und N erwartet werden. Bezüglich der Mittelung über die Umgebung M * N läßt sich die Rechenzeit beispielsweise ebenfalls wesentlich verkürzen, wenn bei der Summierung um die Umgebung eine die Schrittweite von größer als 1 vorgesehen wird oder wenn im Interface 14 bei der zahlenmäßigen Bearbeitung ein entsprechendes Netzwerk zur Bildung der Umgebungssummen in Zeilenrichtung eingesetzt wird.

## Patentansprüche

1. Verfahren zur elektronischen Aufnahme eines als Funktion G(x, y) darstellbaren Bildes (50, 51, 52, 53, 54, 55) von der Oberfläche eines Gegenstandes, bei dem x und y die Koordinaten eines jeweiligen Bildpunktes des Bildes (50, 51, 52, 53, 54, 55) sind und G dessen Grauwert bezeichnet, wobei der Gegenstand über verschiedene Zeitpunkte $t_i$ sequentiell mit $t_{i+1} > t_i$ aus unterschiedlichen Perspektiven als Funktion $G_i$ aufgenommen wird, um das Gesamtbild G wie beim Abrollen eines Fingers (8) zur Aufnahme eines Fingerabdrucks aus den Einzelbildern $G_i$ (x,y) zu bilden, wobei aus den Einzelbildern jeweils Teilstücke herausgeschnitten werden, die in Abhängigkeit der jeweilig aufgenommenen Ansicht zusammengefügt werden, **dadurch gekennzeichnet, daß** eine gekrümmte Schnittlinie (76) zur Bestimmung der Teilstücke von jedem außer dem ersten Bild $G_i$ durch Vergleich mit dem Bildinhalt des vorhergehend aufgenommenen oder zusammengesetzten Bildes $G_{i-1}$ ermittelt wird, mit der das Teilstück des Bildes (50, 51, 52, 53, 54, 55) $G_{i-1}$ begrenzt wird und nachfolgend das entsprechende Teilstück des Bildes $G_i$ an dieser Schnittlinie (76) zum Bilden des Gesamtbildes G(x, y) angefügt wird, wobei diese Schnittlinie (76) durch Bilden einer Ähnlichkeitsfunktion $G_c(x, y)$ zwischen den Bildern $G_i$ und $G_{i-1}$ ermittelt wird, welche bei gleichen Grauwerten an gleichen Bildpunktkoordinaten oder auch unter Einschluß von deren Umgebung extremal wird, und die Schnittlinie (76) durch einen Kurvenverlauf y(x) gebildet wird, der durch mindestens ein Extremum höchster Ähnlichkeit der Ähnlichkeitsfunktion $G_c(x,y)$ verläuft.

2. Verfahren nach Anspruch 1, **dadurch gekennzeichnet, daß** für den Kurvenverlauf y(x) eine Schnittlinie (76) bestimmt wird, bei dem die Summe der Werte der Ähnlichkeitsfunktion $G_c(x,y(x))$ über den Kurvenverlauf y(x) bezüglich der Ähnlichkeit extremal wird.

3. Verfahren nach Anspruch 2, **dadurch gekennzeichnet, daß** die Ähnlichkeitsfunktion bei Ähnlichkeit des Bildinhalts der zu vergleichenden Bilder (50, 51, 52, 53, 54, 55) minimal wird, daß ein Minimum für die Schnittlinie (76) durch das Bellman Verfahren gewonnen wird, bei dem der durch Bildpunkte j **gekennzeichnete** Verlauf $y_j$ $(x_i)$ jeweils für dasjenige $y_j$ bei den zugeordneten $x_i$ ausgewählt wird, für das eine Summe S(x,y) über dem Gesamtgebiet minimal ist, die sich aus den vorherigen Summenwerten $S(x_{i-1}\ y_i)$ rekursiv ergibt durch:

$$S(x_1, y_i) = G_C(x_1, y_i)$$

für den Startwert k = 1 und
für k>1 :

$$S(x_k, y_i) = G_C(x_k, y_i) + \min \{ S(X_{k-1}, y_v) : i-1 \le v \le i+1 \}.$$

**4.** Verfahren nach einem der Ansprüche 1 bis 3, **dadurch gekennzeichnet, daß** für den Zeitpunkt $t_i$ ein momentanes Gesamtbild $G_M$ aus allen vorangehenden Teilbildern $G_k$ (k<i) zusammengefügt wird und daß die Ähnlichkeitsfunktion mit diesem momentanen Gesamtbild $G_M$ durch Vergleich mit dem beim Zeitpunkt $t_i$ aufgenommenen Teilbild $G_i$ gebildet wird.

**5.** Verfahren nach einem der Ansprüche 1 bis 4, **dadurch gekennzeichnet, daß** die Ähnlichkeitsfunktion eine dem Absolutbetrag der Differenz selbst oder der Differenz der Abweichungen vom Mittelwert der Grauwerte proportionale Funktion ist, die über eine Umgebung von N×M Bildpunkte gemittelt wird, wobei das zu suchende Extremum ein Minimum ist.

**6.** Verfahren nach Anspruch 5, **dadurch gekennzeichnet, daß** eine die Ähnlichkeit zweier Funktionen $F_1$ und $F_2$ beschreibende Ähnlichkeitsfunktion $G_C$ durch den Ausdruck

$$G_C(x_i, y_k) = \sum_{v=-N/2}^{N/2} \sum_{\mu=-M/2}^{M/2} \left| \left[ F_1(x_{i+v}, y_{k+\mu}) - m_1(x_i, y_k) \right] - \left[ F_2(x_{i+v}, y_{k+\mu}) - m_2(x_i, y_k) \right] \right|$$

gebildet wird, wobei

$$m_{1,2}(x_i, y_k) = \frac{1}{(N+1) \cdot (M+1)} \sum_{v=-N/2}^{N/2} \sum_{\mu=-N/2}^{N/2} F_{1,2}(x_{i+v}, y_{k+\mu})$$

oder Null ist,
und für jeden n-ten Zeitpunkt $t_n$ insbesondere $F_1 = G_n$ und $F_2$ gleich $G_{n-1}$ oder die Grauwertfunktion eines aus allen vorhergehenden Teilbildern $G_m$(m<n) zusammengefügten Gesamtbildes $G_M$ gesetzt wird.

**7.** Verfahren nach Anspruch 6, **dadurch gekennzeichnet, daß** bei mindestens einer Summenbildung die Schrittweite größer als ein Bildpunktabstand ist.

**8.** Verfahren nach Anspruch 5 oder 6, **dadurch gekennzeichnet, daß** für N und M ein Wert gewählt wird, der größer als eine und insbesondere mehr als zwei Breiten von den in den Bildern auftretenden minimalen Strukturen ist, wobei die minimale Struktur bei einer Fingerabdruckerfassung der mittlere Abstand zwischen benachbarten Fingerlinien ist.

**9.** Verfahren nach einem der Ansprüche 1 bis 8, **dadurch gekennzeichnet, daß** ein Gebiet vor dem Berechnen der Ähnlichkeitsfunktion bestimmt wird, in dem der Absolutbetrag der Differenz der beiden Grauwerte zweier Bilder an jedem Bildpunkt kleiner als ein vorgegebener Schwellwert ist, für dieses Gebiet eine Maske erzeugt wird, die Bilder mit dieser Maske mittels einer logischen UND-Verknüpfung maskiert werden und die Ähnlichkeitsfunktion sowie die Schnittlinie (76) ausschließlich in dem maskierten Gebiet bestimmt werden.

**10.** Verfahren nach einem der Ansprüche 1 bis 9, **dadurch gekennzeichnet, daß** für jedes aufgenommene Bild ein Schwerpunkt (62) bestimmt wird und ein Bild (50, 51, 52, 53, 54, 55) mit einem Schwerpunktabstand zum vorhergehenden als $G_i$ abgespeicherten Bild (50, 51, 52, 53, 54, 55), der kleiner als ein vorgegebener Vergleichsabstand ist, verworfen wird, also nicht als $G_{i+1}$ abgespeichert und bei der Bildung des Gesamtbildes nicht berücksichtigt wird

11. Verfahren nach Anspruch 10, **dadurch gekennzeichnet, daß** der vorhergegebene Vergleichsabstand so gewählt ist, daß bei bestimmungsgemäßem Einsatz des Verfahrens maximal 50 Bilder (50, 51 , 52, 53, 54, 55) aufgenommen werden.

12. Verfahren nach Anspruch 10 oder 11, **dadurch gekennzeichnet, daß** ein Zeilenschwerpunkt für jede Zeile während der Bildauslesung berechnet wird und der Mittelwert der Zeilenschwerpunkte anschließend als Schwerpunkt (62) des jeweiligen Bildes (50, 51, 52, 53, 54, 55) über alle Zeilen eingesetzt wird.

13. Vorrichtung mit einer Einrichtung zur elektronischen Aufnahme eines durch eine Funktion G(x,y) als Bildpunkte darstellbaren Bildes (50, 51, 52, 53, 54, 55) von der Oberfläche eines Gegenstandes, bei denen x und y die Koordinaten des jeweiligen Bildpunktes mit einem zugeordneten Grauwert G sind, sowie mit einer Einrichtung (12), mit welcher der Gegenstand über verschiedene Zeitpunkte $t_i$ sequentiell, mit $t_{i+1} > t_i$, aus unterschiedlichen Perspektiven als Funktion $G_i$ abgebildet wird, um das Gesamtbild $G_i$ wie beim Abrollen eines Fingers (8) zur Aufnahme eines Fingerabdrucks aus den Einzelbildern $G_i(x,y)$ zu bilden, und einer elektronischen Bildverarbeitungseinrichtung (16), deren Schaltung (22) dafür ausgelegt ist, aus den Einzelbildern jeweils Teilstücke herauszuschneiden und in Abhängigkeit der jeweilig aufgenommenen Ansicht zusammenzufügen, **dadurch gekennzeichnet, daß** die Schaltung der Bildverarbeitungseinrichtung (16) dafür ausgelegt ist, zur Bestimmung der Teilstücke von jedem außer dem ersten Bild G eine gekrümmte Schnittlinie (76) durch Vergleich mit dem Bildinhalt des vorhergehend aufgenommenen oder zusammengesetzten Bildes $G_{i-1}$ zu ermitteln, das Teilstück des Bildes $G_{i-1}$ durch diese Schnittlinie (76) zu begrenzen sowie danach das entsprechende Teilstück des Bildes $G_i$ zum Bilden des Gesamtbildes G(x, y) an dieser Schnittlinie (76) anzufügen und daß in der Schaltung ein Prozessor (24) vorgesehen ist, der diese Schnittlinie (76) durch Bilden einer Ähnlichkeitsfunktion $G_c(x, y)$ zwischen den Bildern $G_i$ und $G_{i-1}$ ermittelt, welche bei gleichen Grauwerten an gleichen Bildpunktkoordinaten oder auch unter Einschluß von deren Umgebung extremal ist und die Schnittlinie (76) durch einen Kurvenverlauf y(x) bildet, der durch mindestens ein Extremum höchster Ähnlichkeit der Ähnlichkeitsfunktion $G_c(x, y)$ verläuft.

14. Anwendung des Verfahrens nach einem der Ansprüche 1 bis 12 in einer Vorrichtung nach Anspruch 13 zur elektronischen Bildaufnahme und Bildverarbeitung von Fingerabdrücken.

**Claims**

1. Method of electronically recording an image (50, 51, 52, 53, 54, 55) of the surface of an object, which image can be represented as a function G(x, y) wherein x and y are the coordinates of a particular image point of the image (50, 51, 52, 53, 54, 55) and G denotes its grey value, the object being recorded over various time points $t_i$ sequentially, with $t_{i+1} > t_i$, from different perspectives as function $G_i$ in order to form from the individual images $G_i(x,y)$ the total image G, such as when rolling a finger (8) for recording a fingerprint, wherein portions are cut out from each of the individual images and are assembled in dependence upon the particular view recorded, **characterised in that** for determining the portions of each image $G_i$, except for the first image, there is ascertained by comparison with the image content of the preceding recorded or assembled image $G_{i-1}$ a curved line of intersection (76) with which the portion of the image (50, 51, 52, 53, 54, 55) $G_{i-1}$ is defined, and subsequently the relevant portion of the image $G_i$ is attached at that line of intersection (76) to form the total image G(x,y), the line of intersection (76) being ascertained by forming a similarity function $G_c(x,y)$ between the images $G_i$ and $G_{i-1}$ which becomes extremal in the case of the same grey values at the same image-point coordinates or with the inclusion of their neighbourhood, and the line of intersection (76) is formed by a curve progression y(x) which passes through at least one extremum of highest similarity of the similarity function $G_c(x,y)$.

2. Method according to claim 1, **characterised in that** for the curve progression y(x) a line of intersection (76) is determined for which the sum of the values of the similarity function $G_c(x,y(x))$ over the curve progression y(x) becomes extremal in respect of similarity.

3. Method according to claim 2, **characterised in that** in the event of similarity of the image content of the images (50, 51, 52, 53, 54, 55) being compared, the similarity function becomes minimal; and a minimum for the line of intersection (76) is obtained by the Bellman method in which the progression $y_j(x_i)$ **characterised by** image points j is in each case selected for that $y_j$, at the associated $x_i$ values, for which a sum S(x,y) is minimal over the total area, which sum is obtained recursively from the previous sum values $S(x_{j-1},y_j)$ by:

$$S(x_1,y_i)= G_c(x_1,y_i)$$

for the start value k = 1 and
for k>1 :

$$S(x_k,y_i)= G_c(x_k,y_i)+\min \{S (x_{k-1},y_v) : i\text{-}1 \leq v \leq i+1\}.$$

4. Method according to any one of claims 1 to 3, **characterised in that** for the time point $t_i$ an instantaneous total image $G_M$ is assembled from all preceding partial images $G_k$ (k<i); and the similarity function with that instantaneous total image $G_M$ is formed by comparison with the partial image $G_i$ recorded at time point $t_i$.

5. Method according to any one of claims 1 to 4, **characterised in that** the similarity function is a function proportional to the absolute value of the difference itself or of the difference of deviations from the mean of the grey values, which function is averaged over a neighbourhood of NxM image points, the extremum being sought being a minimum.

6. Method according to claim 5, **characterised in that** a similarity function $G_c$ describing the similarity of two functions $F_1$ and $F_2$ is formed by the expression

$$G_C(x_i,y_k)= \sum_{v=-N/2}^{N/2} \sum_{\mu=-M/2}^{M/2} \left| \left[ F_1(x_{i+v},y_{k+\mu}) - m_1(x_i,y_k) \right] - \left[ F_2(x_{i+v},y_{k+\mu}) - m_2(x_i,y_k) \right] \right|$$

where

$$m_{1,2}(x_i,y_k)= \frac{1}{(N+1)\cdot(M+1)} \sum_{v=-N/2}^{N/2} \sum_{\mu=-N/2}^{N/2} F_{1,2}(x_{i+v},y_{k+\mu})$$

or is zero,
and for each nth time point $t_n$ especially $F_1 =G_n$ and $F_2$ is equal to $G_{n-1}$ or the grey value function of a total image $G_M$ assembled from all preceding partial images $G_m$(m<n) is set.

7. Method according to claim 6, **characterised in that** in the case of at least one summation the step width is greater than an image-point spacing.

8. Method according to claim 5 or 6, **characterised in that** for N and M a value is selected which is greater than one width and especially greater than two widths of the minimum structures occurring in the images, the minimum structure in the case of fingerprint capture being the mean distance between adjacent ridges.

9. Method according to any one of claims 1 to 8, **characterised in that**, before the similarity function is calculated, an area is determined in which the absolute value of the difference of the two grey values of two images at each image point is smaller than a predetermined threshold value, a mask is created for that area, the images are masked with that mask by means of a logical AND relation, and the similarity function and the line of intersection (76) are determined exclusively in the masked area.

10. Method according to any one of claims 1 to 9, **characterised in that** for each recorded image a focal point (62) is determined and an image (50, 51, 52, 53, 54, 55) with a focal point spacing relative to the preceding image (50, 51, 52, 53, 54, 55) stored as $G_i$ that is smaller than a predetermined reference spacing is discarded, that is to say is not stored as $G_{i+1}$ and is not taken into account in the formation of the total image.

**11.** Method according to claim 10, **characterised in that** the predetermined reference spacing is so selected that when the method is used as stipulated a maximum of 50 images (50, 51, 52, 53, 54, 55) are recorded.

**12.** Method according to claim 10 to 11, **characterised in that** a line focal point is calculated for each line during the image read-out and the mean of the line focal points is then used as the focal point (62) of the respective image (50, 51, 52, 53, 54, 55) over all lines.

**13.** Apparatus having a device for electronically recording an image (50, 51, 52, 53, 54, 55) of the surface of an object, which image can be represented as image points by a function G(x, y) wherein x and y are the coordinates of the image point in question with an associated grey value G, and having a device (12) with which an image of the object is recorded over various time points $t_i$ sequentially, with $t_{i+1} > t_i$, from different perspectives as function $G_i$ in order to form from the individual images $G_i(x,y)$ the total image G, such as when rotting a finger (8) for recording a fingerprint, and having an electronic image-processing device (16), the circuit (22) of which is designed to cut out portions from each of the individual images and assemble them in dependence upon the particular view recorded, **characterised in that** the circuit of the image-processing device (16) is designed to ascertain a curved line of intersection (76) for determining the portions of each image $G_i$, except for the first image, by comparison with the image content of the preceding recorded or assembled image $G_{i-1}$, to define the portion of the image $G_{i-1}$ by that line of intersection (76) and then to attach the relevant portion of the image $G_i$ at that line of intersection (76) to form the total image G(x,y); and in the circuit there is provided a processor (24) which ascertains the line of intersection (76) by forming a similarity function $G_c(x,y)$ between the images $G_i$ and $G_{i-1}$ which is extremal in the case of the same grey values at the same image-point coordinates or with the inclusion of their neighbourhood and forms the line of intersection (76) by a curve progression y(x) which passes through at least one extremum of highest similarity of the similarity function $G_c(x,y)$.

**14.** Use of the method according to any one of claims 1 to 12 in an apparatus according to claim 13 for the electronic image-recording and image-processing of fingerprints.

**Revendications**

**1.** Procédé d'enregistrement électronique d'une image (50, 51, 52, 53, 54, 55), pouvant être représentée comme fonction G(x, y), de la surface d'un objet, dans lequel x et y sont les coordonnées d'un point d'image respectif de l'image (50, 51, 52, 53, 54, 55) et G désigne sa valeur de gris, l'objet étant pris à différents instants $(t_i)$, de manière séquentielle avec $(t_{i+1} > t_i)$, depuis différentes perspectives, comme fonction $(G_i)$, afin de former l'image globale G comme lorsque l'on fait rouler un doigt (8) pour prendre l'empreinte du doigt, à partir des images individuelles $G_i(x,y)$, des parties étant découpées chaque fois dans chaque image, qui sont assemblées en fonction de la vue prise chaque fois, **caractérisé en ce qu'**on détermine une ligne de coupe (76) courbée pour déterminer les parties de chaque image, à l'exception de la première image $G_i$, par comparaison avec le contenu de l'image $G_{i-1}$ prise ou assemblée précédemment, au moyen de laquelle la partie de l'image (50, 51, 52, 53, 54, 55) $G_{i-1}$ est délimitée, et ensuite on adjoint la partie correspondante de l'image $G_i$ à cette ligne de coupe (76) pour former l'image globale G(x,y), cette ligne de coupe (76) étant déterminée par formation d'une fonction de similitude $G_c(x,y)$ entre les images $G_i$ et $G_{i-1}$, laquelle devient extrême pour des valeurs de gris identiques en des coordonnées de points d'image identiques ou encore avec inclusion de leur environnement, et la ligne de coupe (76) est formée par une allure de courbe y(x) qui passe par au moins un extrême de similitude maximale de la fonction de similitude $G_c(x,y)$.

**2.** Procédé selon la revendication 1, **caractérisé en ce que** pour l'allure de courbe y(x), on détermine une ligne de coupe (76) pour laquelle la somme des valeurs de la fonction de similitude $G_c(x,y(x))$ devient extrême sur l'allure de courbe y(x) en ce qui concerne la similitude.

**3.** Procédé selon la revendication 2, **caractérisé en ce que** la fonction de similitude devient minime en cas de similitude du contenu des images (50, 51, 52, 53, 54, 55) à comparer, **en ce qu'**on obtient un minimum pour la ligne de coupe (76) par le procédé de Bellman pour lequel l'allure $y_i(x_i)$ **caractérisée par** des points d'image j, est sélectionnée dans chaque cas pour le $y_j$ dans les $x_i$ associés, pour laquelle une somme S(x,y) est minime sur l'ensemble du domaine, somme que l'on obtient de manière récursive à partir des valeurs des sommes $S(x_{j-1}, y_j)$ précédentes :

$$S(x_1,y_1)=G_c(x_1,y_1)$$

pour la valeur de départ k = 1 et
pour k> 1 :

$$S(x_k, y_i) = G_c(x_k, y_i) + \min\{S(x_{k-1}, y_v) : i\text{-}1 \leq v \leq i+1\}$$

**4.** Procédé selon l'une des revendications 1 à 3, **caractérisé en ce qu'**à l'instant $t_i$ on assemble une image globale momentanée $G_M$ à partir de toutes les images partielles $G_k$ (k<i) précédentes et **en ce que** la fonction de similitude est formée avec cette image globale momentanée $G_M$ par comparaison avec l'image partielle $G_i$ prise à l'instant $t_i$.

**5.** Procédé selon l'une des revendications 1 à 4, **caractérisé en ce que** la fonction de similitude est une fonction proportionnelle à la valeur absolue de la différence elle-même ou de la différence des écarts par rapport à la valeur moyenne des valeurs de gris, la moyenne de cette fonction étant calculée sur un environnement de NxM points d'image et l'extrême à rechercher étant un minimum.

**6.** Procédé selon la revendication 5, **caractérisé en ce qu'**une fonction de similitude $G_c$ décrivant la similitude de deux fonctions $F_1$ et $F_2$ est formée par l'expression

$$G_c(x_i, y_k) = \sum_{v=-N/2}^{N/2} \sum_{\mu=-M/2}^{M/2} \Big| \big[ F_1(x_{i+v}, y_{k+\mu}) - m_1(x_i, y_k) \big] - \big[ F_2(x_{i+v}, y_{k+\mu}) - m_2(x_i, y_k) \big] \Big|$$

dans laquelle

$$m_{1,2}(x_i, y_k) = \frac{1}{(N+1).(M+1)} \sum_{v=-N/2}^{N/2} \sum_{\mu=-N/2}^{N/2} F_{1,2}(x_{i+v}, y_{k+\mu})$$

ou est égal à zéro,
et pour chaque $n^{ième}$ instant $t_n$, on pose en particulier $F_1 = G_n$ et $F_2$ égale $G_{n-1}$ ou la fonction de valeur de gris d'une image globale $G_M$ assemblée à partir de toutes les images partielles $G_m$(m<n) précédentes.

**7.** Procédé selon la revendication 6, **caractérisé en ce que** pour au moins une formation de sommes, la largeur du pas est supérieure à une distance entre points d'image.

**8.** Procédé selon la revendication 5 ou 6, **caractérisé en ce que** pour N et M on choisit une valeur qui est supérieure à une et en particulier à plus de deux largeurs des structures minimales apparaissant dans les images, la structure minimale pour la prise d'empreintes d'un doigt étant la distance moyenne entre des lignes de doigt voisines.

**9.** Procédé selon l'une des revendications 1 à 8, **caractérisé en ce qu'**on détermine un domaine avant le calcul de la fonction de similitude dans lequel la valeur absolue de la différence des deux valeurs de gris de deux images en chaque point d'image est inférieure à une valeur de seuil prédéfinie, pour ce domaine, on réalise un masque, les images sont masquées avec ce masque au moyen d'une fonction logique ET, et la fonction de similitude ainsi que la ligne de coupe (76) sont déterminées exclusivement dans le domaine masqué.

**10.** Procédé selon l'une des revendications 1 à 9, **caractérisé en ce que** pour chaque image prise on détermine un centre de gravité (62) et une image (50, 51, 52, 53, 54, 55) avec une distance de centre de gravité par rapport à l'image (50, 51, 52, 53, 54, 55) précédente mémorisée comme $G_i$, qui est inférieure à une distance de référence prédéfinie, est rejetée, c'est-à-dire non mémorisée comme $G_{i+1}$, et n'est pas prise en compte dans la formation de l'image globale.

**11.** Procédé selon la revendication 10, **caractérisé en ce que** la distance de référence prédéfinie est choisie de manière qu'en cas de mise en oeuvre correcte du procédé, 50 images (50, 51, 52, 53, 54, 55) au maximum soient prises.

**12.** Procédé selon la revendication 10 ou 11, **caractérisé en ce qu'**on calcule un centre de gravité de ligne pour chaque ligne pendant l'extraction d'image et la valeur moyenne des centres de gravité de ligne est ensuite utilisée comme centre de gravité (62) de l'image (50, 51, 52, 53, 54, 55) respective sur toutes les lignes.

**13.** Dispositif comportant un équipement pour l'enregistrement électronique d'une image (50, 51, 52, 53, 54, 55) pouvant être représentée comme points d'image, de la surface d'un objet, pour lesquels x et y sont les coordonnées du point d'image respectif avec une valeur de gris G associée, et comportant un équipement (12) au moyen duquel l'objet est reproduit à différents instants $t_i$, de manière séquentielle, avec $t_{i+1} > t_i$, depuis différentes perspectives comme fonction $G_i$, comme lorsque l'on fait rouler un doigt (8) pour prendre une empreinte de doigt, à partir des images partielles $G_i$ sur la ligne (x, y), ainsi qu'un dispositif électronique de traitement d'image (16) dont le circuit (22) est conçu pour découper dans les images individuelles des parties et les assembler en fonction de la vue prise dans chaque cas, **caractérisé en ce que** le circuit du dispositif de traitement d'image (16) est conçu pour déterminer, en vue de la détermination des parties de chaque image à l'exception de la première image $G_i$, une ligne de coupe (76) courbée par comparaison avec le contenu de l'image $G_{i-1}$ prise ou assemblée précédemment, pour limiter la partie de l'image $G_{i-1}$ par cette ligne de coupe (76) ainsi que pour adjoindre ensuite à cette ligne de coupe (76) la partie correspondante de l'image $G_i$ pour former l'image globale Gx,y, et **en ce que** dans le circuit est prévu un processeur (24) qui détermine cette ligne de coupe (76) par formation d'une fonction de similitude $G_c$ sur la ligne (x,y) entre les images $G_i$ et $G_{i-1}$, laquelle devient extrême pour des valeurs de gris identiques en des coordonnées de points d'image identiques ou encore avec inclusion de leur environnement, et la ligne de coupe (76) est formée par une allure de courbe y(x) qui passe par au moins un extrême de similitude maximale de la fonction de similitude $G_c(x,y)$.

**14.** Mise en oeuvre du procédé selon l'une des revendications 1 à 12, dans un dispositif selon la revendication 13, pour la prise de vue électronique et le traitement d'image d'empreintes de doigt.

$$G_i(x, y),$$
$$<G_i(x, y)x>_x$$

Fig.1

EP 1 044 424 B1

Fig.2

EP 1 044 424 B1

Fig.3

```
/*  Initialisierung der ersten Zeile des Summenfeldes  */
for( x=0; x<W; x++ ) {
  sum[0][x] = coeff[0][x];
}


/*  Zeilenweise Aktualisierung der Summen und Vorgaenger  */
for( y=1; y<H; y++ ) {
  for( x=0; x<W; x++ ) {
    if( sum[y-1][x-1] < sum[y-1][x+1] ) {
      xmin = x-1;
    } else {
      xmin = x+1;
    }
    min = sum[y-1][xmin];
    if( sum[y-1][x] <= min ) {
      xmin = x;
      min = sum[y-1][xmin];
    }
    sum[y][x] = coeff[y][x] + min;
    pred[y][x] = xmin;
  }
}


/*  Minimum-Suche in der untersten Zeile  */
xmin = 0;
min = sum[H-1][xmin];
for( x=1; x<W; x++ ) {
  if( sum[H-1][x] < min ) {
    xmin = x;
    min = sum[H-1][xmin];
  }
}
path[H-1] = xmin;

/*  Rueckverfolgung des Pfadverlaufs  */
for( y=H-1; y>0; y-- ) {
  path[y-1] = pred[y][ path[y] ];
}
```

Fig.4